# EUROPEAN PATENT APPLICATION

(11) **EP 1 887 756 A2**
(43) Date of publication of application: **13.02.2008**
(21) Application number: 07112465.5
(22) Date of filing: 13.07.2007
(51) Int. Cl.: H04L 29/06

(54) **Communication system, connection adapter for communication device, and network router**

(30) Priority: 27.07.2006 JP 2006204865
(71) Applicant: Sanden Corporation, Isesaki-shi, Gunma 372-8502 (JP)
(72) Inventor: Tabata, Masaru, Isesaki-shi, Gunma 372-8502 (JP)
(74) Representative: Haley, Stephen

(57) **Abstract**

A connection adapter (1) is arranged to intervene between a communication device (20) for connection to a radio packet communication network and high-level equipment (10) that performs communication using the communication device (20). Also, a tunnel is formed between the connection adapter (1) and a network router (60) in a radio packet communication network (40) to pass IP packets pertaining to communication between the high-level equipment (10) and a LAN (50) through the tunnel.

## Description

The present invention relates to a communication system for use in the field of telemetering used for such purposes as collection of sales information from vending machines or the field of telematics used for distribution of traffic information to mobile objects and like purposes.

Today, telemeterting and telematics techniques by which information is collected or distributed via radio packet communication networks are in increasingly extensive use. Telemetering used to be a generic term referring to mechanisms for reading measurements of measuring instruments using a communication line. It now finds a broader range of reference, covering not only data reading but also the monitoring of operation or remote control of devices. Typical applications of telemetering include sales management systems for vending machines, consumption management system for gas, water, and other utilities, and management systems for unmanned parking lots. For an example of sales management systems for vending machines, reference may be made to Japanese Patent Publication 2003-51056. Telematics means real-time supply of information services to mobile objects such as vehicles in combination with a communication system. Typical applications of telematics include a vehicle-mounted information system for providing traffic information, navigation information and the like in real time to terminals installed on automobiles.

Techniques in these fields require a communication device for connecting to a radio packet communication network at a remote location and high-level equipment that uses the communication device. The high-level equipment corresponds to DTE (Data Terminal Equipment), and the communication device, to DCE (Data Circuit-terminating Equipment). In a sales management system for vending machines, for example, a control device for controlling sales actions or the inside temperature corresponds to the high-level equipment.

The radio packet communication network is architected by use of a network connection service provided by a communication carrier for connecting a radio communication terminal to a LAN. In the network connection service, a network router is installed in a LAN of the user of the service, and the user can connect a radio communication terminal to the LAN via the radio packet communication network architected by the service. The radio communication terminal is typically connected to the LAN over the radio packet communication network only when necessary using a protocol such as PPP (Point-to-Point Protocol). The address space for the radio packet communication network is defined in advance by the carrier, and a fixed IP address included in the address space is allocated as an IP address of the network router for use on the side of the radio packet communication network (i.e., the WAN side). For the IP address of the radio communication terminal, a fixed IP address included in the address space is allocated, or an IP address included in the address space is dynamically assigned when the radio communication terminal is connected to the radio packet communication network.

Radio packet communication networks have different standards, service systems and the like from carrier to carrier. Communication devices accordingly have different standards and/or operations from carrier to carrier. For example, the ways of allocating an IP address to a connection terminal, connecting and authenticating the terminal, or other actions depend on a network connection service provided by a carrier. Therefore, when the high-level equipment is designed, a carrier and a communication device for use with the equipment are selected in advance, and the equipment is designed so that it performs operations matching that communication device.

There has recently been a need to change a carrier or a service after architecting such a system. This may be because radio wave condition is unstable or unfit through the carrier where the high-level equipment is installed, for example. In particular, there is a need to switch from a network connection service that allocates fixed IP addresses to a connection terminal to a service that dynamically assigns IP addresses.

However, a network connection service that dynamically assigns IP addresses has a problem that communication cannot be started from a device on the LAN side to a connection terminal because the IP address of a connection terminal is indefinite. In addition, change of a carrier or a service requires change of a communication device as well, which in turn requires altering or remodeling of the high-level equipment. Since the high-level equipment is distributed at remote locations due to the nature of a system of this kind, the amount of work involved for altering or remodeling of the high-level equipment would be enormous when a large quantity of high-level equipment is already installed in a market. Aside from change of a carrier and the like, a similar problem can arise along with the model change of a communication device even for the same carrier. This problem can also be encountered at the time of future change of a carrier or a device model. Accordingly, architecting of a system requires deliberate selection of a service, a carrier, and a device model. Furthermore, when a system that uses a number of carriers, services and communication devices is to be architected, it is necessary to prepare matching high-level equipment for each of the carriers and/or communication devices, which leads to a problem of high system architecting costs.

An object of the present invention is to provide a communication system that can utilize various network connection services.

To attain the above object, the present application proposes a communication system that utilizes a network connection service which connects a LAN and a radio communication terminal via a radio packet communication network and which dynamically assigns an IP address to the radio communication terminal, wherein: a network router is disposed at the boundary between the radio packet communication network and the LAN; the radio communication terminal comprises a communication device for connection to the radio packet communication network, high-level equipment for performing communication using the communication device, and a connection adapter for intervening between the communication device and the high-level equipment to relay communication; and a tunnel is formed in the radio packet communication network between the connection adapter and the network router so that IP packets pertaining to communication between the high-level equipment and the LAN are passed through the tunnel.

According to the invention, a tunnel is formed between the connection adapter that intervenes the high-level equipment and the communication adapter, and the network router, so that IP packet pertaining to communication between the high-level equipment and a terminal on the LAN side pass through the tunnel. Consequently, it is possible to adopt various radio packet communication networks and connection services without having to altering or remodeling the high-level equipment and/or terminals on the LAN side.

The present application also proposes the communication system, wherein the connection adapter comprises a communication controller for delivering to the network router an IP packet which encapsulates an IP packet received from the high-level equipment and a telephone number allocated in advance to the communication device in a container; and the network router comprises a storage which has stored therein a correspondence table showing correspondence between the telephone number allocated in advance to the communication device and an IP address, and a communication controller for decapsulating an IP packet received from the connection adapter, acquiring from the storage an IP address matching a telephone number that results from the decapsulation, and rewriting the source address of an IP packet resulting from the decapsulation to the IP address.

According to the invention, the LAN side communicating with the high-level equipment uses an IP address matching the telephone number of a communication device connected to the high-level equipment as the IP address of the high-level equipment. A correspondence table showing correspondence between the IP address and the telephone number is managed in the router. This enables the LAN side to freely set an IP address of the high-level equipment regardless of an IP address set for the high-level equipment. Accordingly, this enables flexible network design and network management is facilitated. Also, network management is further facilitated because the LAN side is freed from management of IP addresses set for the high-level equipment and has only to manage telephone numbers of communication devices.

The present application also proposes the communication system, wherein the network router comprises a connection controller for, upon detection of an IP packet pertaining to start of communication from the LAN side to the high-level equipment, acquiring a telephone number matching the destination IP address of the IP packet from the storage, and sending a message to the telephone number by using a messaging service provided by the radio packet communication network; the connection adapter comprises a connection controller for connecting to the radio packet communication network upon receipt of the message from the network router, and notifying the network router of a dynamic IP address assigned by the radio packet communication network; and the communication controller of the network router sets the dynamic IP address received from the connection adapter as the destination IP address of an encapsulated IP packet.

According to the invention, communication can be started from the LAN side even when a network connection service that assigns dynamic IP addresses is utilized.

The present application also proposes the communication system, wherein the connection controller of the connection adapter performs processing of connection to the radio packet communication network as well as processing of connection with the high-level equipment, and acquires the IP address of the high-level equipment; and the communication controller of the connection adapter rewrites the destination address of an IP packet resulting from decapsulation to the IP address of the high-level equipment acquired by the connection controller.

According to the invention, even if the destination address of an IP packet delivered from the LAN to high-level equipment does not correspond with an IP address actually set for the high-level equipment, the destination address of the IP packet is rewritten to the actual IP address at the connection adapter. That is, as long as correspondence between a telephone number and an IP address is appropriately set in the storage of the network router, an arbitrary IP address can be used as an IP address to be set for each high-level equipment. This facilitates network management.

Other objects, configurative aspects, and advantages of the present invention will become apparent from the following detailed description.
FIG. 1 shows the configuration of a communication system;
FIG. 2 shows a network presupposed by high-level equipment and the like;
FIG. 3 illustrates a network of the communication system;
FIG. 4 shows the configuration of a connection adapter;
FIG. 5 is a functional block diagram of a main control unit of the connection adapter;
FIG. 6 illustrates an example of setting information in the connection adapter;
FIG. 7 is a functional block diagram of a network router;
FIG. 8 illustrates an example of a high-level equipment information table;
FIG. 9 illustrates a sequence for a case where a presupposed network connection service is used and communication is stared from the high-level equipment;
FIG. 10 illustrates a sequence for a case where the presupposed network connection service is used and communication is started from a management computer;
FIG. 11 illustrates a sequence for a case where communication is started from the high-level equipment in an embodiment;
FIG. 12 illustrates tunneling processing of a packet from the high-level equipment to the management computer;
FIG. 13 illustrates tunneling processing of a packet from the management computer to the high-level equipment;
FIG. 14 illustrates a sequence for a case where communication is started from the management computer in the embodiment;
FIG. 15 illustrates a sequence for a case where communication is started from the management computer in the embodiment;
FIG. 16 illustrates tunneling processing of a packet from the high-level equipment to the management computer; and
FIG. 17 illustrates tunneling processing of a packet from the management computer to the high-level equipment.

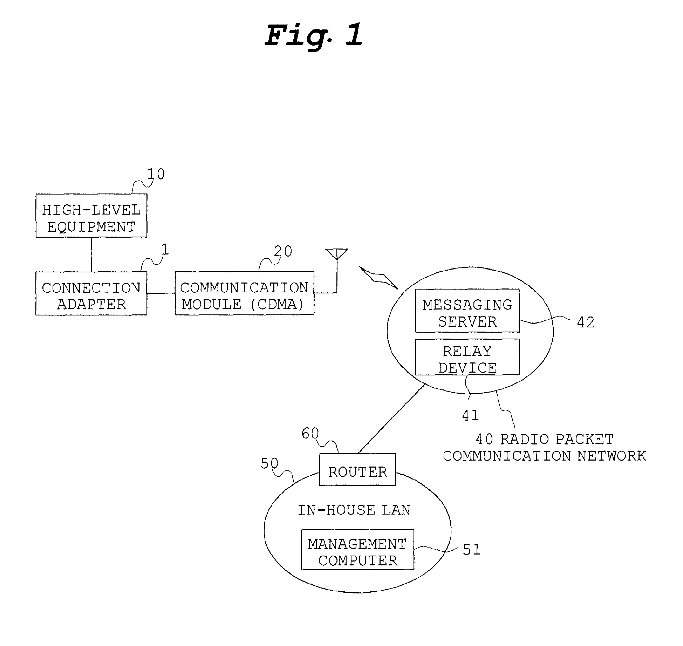

A communication system according to an embodiment of the present invention will be described with reference to drawings. FIG. 1 shows the configuration of a telemetering system that uses the communication system of the invention.

An object of this system is to provide a network environment in which high-level equipment 10, which may be a control device for vending machines, is connected to an in-house LAN 50 via a radio packet communication network 40 as shown in FIG. 1. More specifically, a primary object of the present invention is to make it possible to utilize a network connection service in which the radio packet communication network 40 assigns a dynamic IP address to a connection terminal without requiring remodeling and the like of the high-level equipment 10 and/or a terminal in the in-house LAN 50 (e.g., a management computer 51 for vending machines in the example of FIG. 1) which are configured for a network connection service that assigns IP addresses in a fixed manner. To attain the object, the present invention also has objects of enabling communication to be started from a terminal in the in-house LAN 50 to the high-level equipment 10, and enabling the high-level equipment 10 to be identified in the communication started from the high-level equipment 10. The communication system will be described in detail below.

The high-level equipment 10 corresponds to DTE (Data Terminal Equipment). The high-level equipment 10 is designed to match a specific carrier and a network connection service provided by that carrier. More specifically, it presupposes the use of a network connection service which assigns a fixed IP address to a connection terminal. The high-level equipment 10 is accordingly designed to be connected to a communication module that matches the service. The high-level equipment 10 is also designed to match a connection protocol, an authentication protocol and the like matching that network connection service.

The network connection service which the high-level equipment 10 described above presupposes will be described. In this network connection service, a telephone number is allocated in advance to each communication module by the carrier. The radio packet communication network provided by the network connection service is provided with relaying equipment which performs connection control, packet relaying, and so forth. To the relaying equipment, a telephone number is allocated, corresponding to an in-house LAN which is the network to be connected to. When a call is initiated to the telephone number of the relaying equipment within the radio packet communication network, the terminal having the communication module is connected to a predetermined network, such as the in-house LAN. Connection to the relaying equipment is permitted only from a communication module to which a telephone number is allocated in advance.

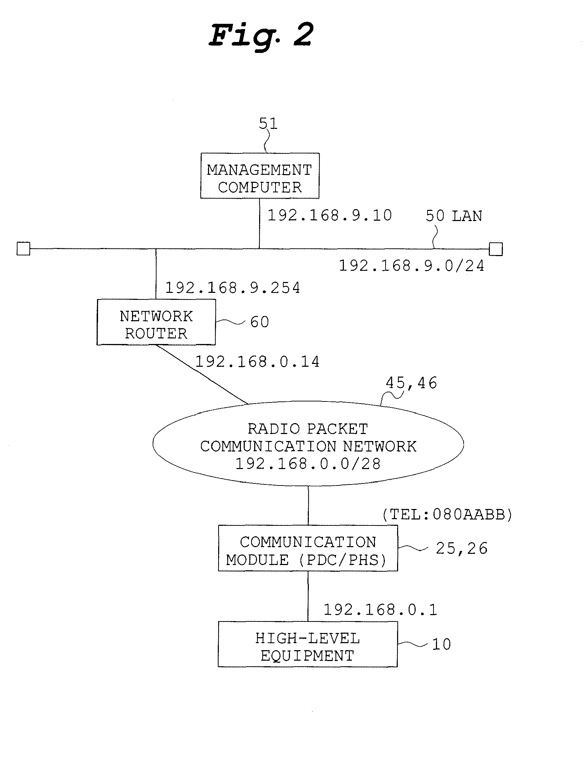

FIG. 2 illustrates an exemplary network diagram for when the network connection service presupposed by the high-level equipment 10 is utilized. As shown in FIG. 2, the high-level equipment 10 is connected to radio packet communication network 45 or 46 architected by the network connection service by using communication modules 25 or 26. This embodiment supposes that the radio packet communication network 45 and the communication module 25 comply with the PDC standards, and the radio packet communication network 46 and the communication module 26, with the PHS standards. In this service, an IP address belonging to a network of 192.168.0.0/28 is allocated in a fixed manner to a WAN-side interface of a network router 60 and/or the communication module 25. The high-level equipment 10 is connected to the LAN 50 through a terminal-type network connection service. Therefore, an IP address allocated to the communication module 25, 26 is equivalent to an IP address allocated to the high-level equipment 10. It is also supposed that, within the in-house LAN 50, an IP address is allocated in a fixed manner to each device so that it belongs to the network of 192.168.9.0/24. Upon receipt of a packet destined for an IP address included in 192.168.0.0/28 from the LAN 50, the network router 60 relays the packet to the radio packet communication network 45 or 46. On the other hand, upon receiving a packet destined for an IP address included in 192.168.9.0/24 from the radio packet communication network 45 or 46, the network router 60 relays the packet to the LAN 50. Such a configuration enables the management computer 51 to start communication to the fixed IP address of the high-level equipment 10. In addition, the management computer 51 can identify the high-level equipment 10 by referencing the source IP address of communication also for the communication started from the high-level equipment 10.

The present invention presupposes the use of such high-level equipment 10 and management computer 51 as they are. According to the invention, a network system can be constructed even in the radio packet communication network 40 which is provided by a network connection service that assigns dynamic IP addresses.

Next, the network connection service that assigns dynamic IP addresses and is used in this embodiment will be described. In this network connection service, a telephone number is allocated to the communication module 20 in advance by the carrier. As shown in FIG. 1, the radio packet communication network 40 is provided with relaying equipment 41 which performs connection control, packet relaying and so forth. A terminal having the communication module 20 is connected to the radio packet communication network 40 by designating a predetermined special number and initiating a call to that number. This terminal is then made connectable to the in-house LAN 50, the network to which it is to be connected, by performing authentication processing with the relaying equipment 41 using PAP (Password Authentication Protocol). In the PAP authentication, the network to be connected is identified by including information in a user name which identifies the destination of connection. In this network connection service, a group of IP addresses in a predetermined range are allocated to the radio packet communication network 40 by the carrier, and an IP address included in the IP address group is dynamically allocated to each communication module 20 by IPCP (Internet Protocol Control Protocol). An IP address to be allocated to the communication module 20 is indefinite: the address may be the same IP address as at the last connection or a different one.

It is also supposed that the network connection service provides a messaging service to users. This messaging service is not a network connection service using TCP/IP, but is implemented by a unique protocol utilizing the radio communication network. With this messaging service, a relatively short message can be transmitted by designating the telephone number of the communication module 20 to a predetermined messaging server 42 that is provided on the radio packet communication network 40 or other network such as the Internet. A message transmission request to the messaging server 42 can use HTTP, SMTP or the like.

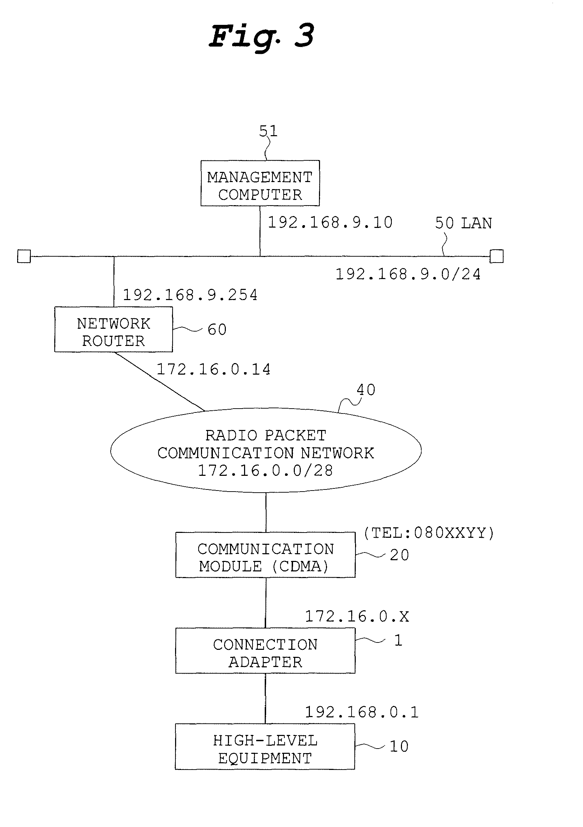

Next, the network diagram of the system according to this embodiment will be described with reference to FIG. 3. FIG. 3 shows a network diagram of the present system. As shown in FIG. 3, in this system, a fixed IP address that belongs to 192.168.9.0/24 is assigned to the in-house LAN 50 as in the network described above with FIG. 2, and a fixed IP address belonging to 192.168.0.0/28 is assigned to the high-level equipment 10. An address group of 172.16.0.0/28 is allocated to the radio packet communication network 40, and a fixed IP address of 172.16.0.14 is allocated to the WAN side of a network router (hereinafter called just a "router") 60 which serves as the boundary between the radio packet communication network 40 and the in-house LAN 50. To the communication module 20, an address included in 172.16.0.0/28 is dynamically allocated when it is connected to the radio packet communication network 40 (denoted as 172.16.0.0.X in the figure for convenience of illustration). A connection adapter 1 is connected to the LAN 50 through a terminal-type network connection service. Accordingly, the IP address of the connection adapter 1 will be an IP address dynamically allocated to the communication module 20. In such a network environment, the present invention enables communication to be started from the management computer 51 in the in-house LAN 50 to the high-level equipment 10, and also enables identification of the high-level equipment 10 when communication is started from the high-level equipment 10 to the management computer 51.

Next, the connection adapter 1 will be described in detail. The connection adapter 1 is intended to connect the high-level equipment 10 of a number of kinds to any of the communication devices 20, 25, and 26 of a number of kinds. The high-level equipment 10 corresponds to DTE (Data Terminal Equipment), and the communication devices 20, 25 and 26 correspond to DCE (Data Circuit-terminating Equipment). The connection adapter 1 of this embodiment matches the communication module 20 of the CDMA standards, the communication module 25 of the PDC standards, and the communication module 26 of the PHS standards. The communication modules 20, 25 and 26 are communication devices for connecting to the radio packet communication networks 40, 45 and 46, respectively, which are architected by a corresponding carrier, and match the communication standards, the communication protocol service defined by the carrier on its own. The high-level equipment 10 is designed to match a specific carrier and a service provided by that carrier as stated above. More specifically, the high-level equipment 10 is designed to be connected to a communication module matching the service, and to match a connection protocol, an authentication protocol and the like matching that service.

The high-level equipment 10 of this embodiment is supposed to be capable of directly connecting to the communication module 25 of the PDC standards and the communication module 26 of the PHS standards. It is further supposed to be made connectable to the in-house LAN 50 via the radio packet communication network 45 or 46 by using the communication module 25 or 26. The connection adapter 1 of this embodiment is made connectable to the in-house LAN 50 via the radio packet communication network 40 using the communication module 20 of the CDMA standards without requiring remodeling or altering of the high-level equipment 10. The connection adapter 1 will be described in further detail below.

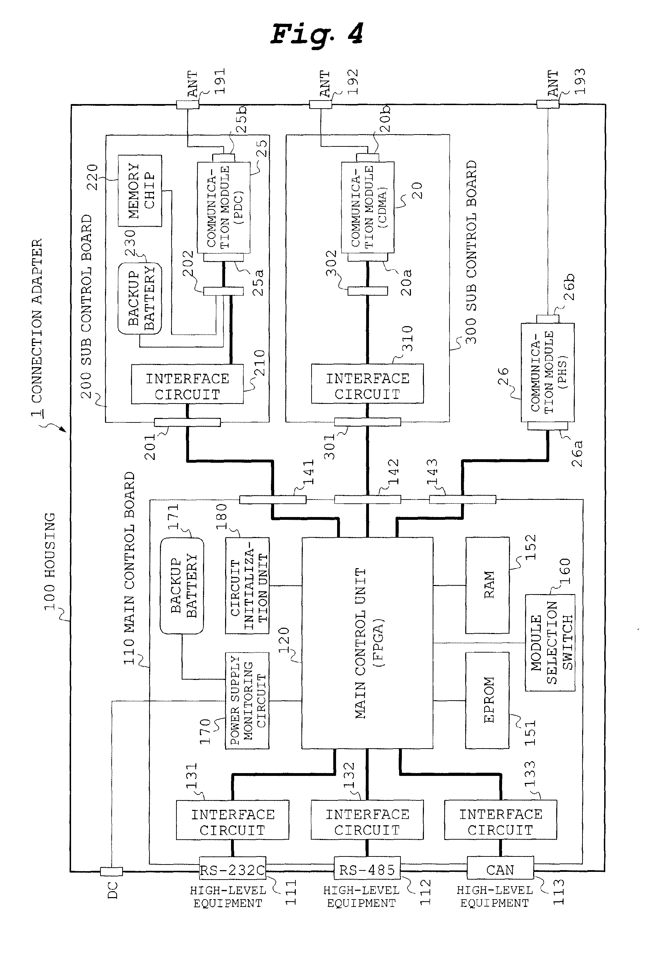

First, the configuration of the connection adapter 1 according to this embodiment will be described with reference to FIG. 4. FIG. 4 illustrates the connection adapter 1 with the three communication modules 20, 25 and 26 contained therein. At the time of operation, however, only at least one(s) of the communication modules 20, 25 and 26 that is actually used has to be contained.

The connection adapter 1 includes, in a housing 100, a main control board 110, a sub control board 200 for mounting the communication module 25 of the PDC standards, a sub control board 300 for mounting the communication module 20 of the CDMA standards, and the communication module 26 of the PHS standards. The sub control boards 200 and 300 as well as the communication module 26 are provided so that they can be attached to and detached from the main control board 110.

The connection adapter 1 of this embodiment is also provided with connectors of a number of types for connection to the high-level equipment. More specifically, on the main control board 110, there are provided a connector 111 for use with the RS-232C standards, a connector 112 for use with the RS-485 standards, and a connector 113 for use with the CAN (Controller Area Network) standards.

On the main control board 110, there are provided a main control unit 120 which is implemented with an FPGA (Field Programmable Gate Array), which is a kind of PLD (Programmable Logic Device), an interface circuit 131 of the RS-232C standards, and an interface circuit 132 of the RS-485 standards, and an interface circuit 133 of the CAN standards. Each of the interface circuits 131, 132 and 133 intervenes between a corresponding connector 111, 112, and 113, respectively, and the main control unit 120. This enables the main control unit 120 to communicate via one of the interface circuits 131, 132 and 133 with high-level equipment connected to a corresponding one of the connectors 111, 112 and 113.

The main control board 110 is also provided with a connector 141 for connection to the sub control board 200, a connector 142 for connection to the sub control board 300, and a connector 143 for connection to the communication module 26 of the PHS standards. Each of the connectors 141, 142 and 143 is connected to the main control unit 120. This enables the main control unit 120 to communicate with the communication module 25 of the PDC standards via the sub control board 200. Similarly, the main control unit 120 can communicate with the communication module 20 of the CDMA standards via the sub control board 300. Also similarly, the main control unit 120 can directly communicate with the communication module 26 of the PHS standards.

On the main control board 110, there are further provided an EPROM 151 which has stored therein a control program for the main control unit 120, and a RAM 152 which is used as an area for various operations of the main control unit 120. On the main control board 110, there is further provided a module selection switch 160 for selecting one of the communication modules 20, 25 and 26 for use. The main control unit 120 performs operations corresponding to one of the communication module 20, 25 and 26 that is selected with the module selection switch 160. The configuration and operation of the main control unit 120 will be described later.

The main control board 110 operates with external supply of direct current (DC) power. The main control board 110 also supplies DC power to the sub control boards 200 and 300 as well as the communication module 26 of the PHS standards via the connectors 141, 142 and 143, respectively. The main control board 110 is also provided with a power supply monitoring circuit 170 for monitoring anomalies of external supply of DC power, and a backup battery 171. When it detects an anomaly of external power supply, the power supply monitoring circuit 170 provides control so that the backup battery 171 supplies power to the main control board 110, sub control boards 200 and 300, and the communication module 26 of the PHS standards. Upon detecting an anomaly of external power supply, the power supply monitoring circuit 170 notifies the main control unit 120 of the anomaly. Furthermore, when it detects recovery of external power supply after occurrence of a power supply anomaly, the power supply monitoring circuit 170 notifies the main control unit 120 of the recovery.

On the main control board 110, there is also provided a circuit initialization unit 180 for initializing and forming the internal circuit of the main control unit 120 which is implemented by an FPGA. The circuit initialization unit 180 contains a program for initializing and forming the internal circuit of the main control unit 120. The circuit initialization unit 180 forms a circuit that constitutes the main control unit 120 within the FPGA with a direction from a terminal (not shown) connected to the outside.

The sub control board 200 is for connecting the main control board 110 to the communication module 25 of the PDC standards. The sub control board 200 is provided with a connector 201 for connection to the main control board 110, a connector 202 for connection to a terminal 25a of the communication module 25 of the PDC standards, and an interface circuit 210 for connecting the main control board 110 to the communication module 25. The interface circuit 210 performs change of the number of pins between the connector 202 and the connector 201, change of pin assignment, waveform shaping and so forth. It is supposed that the communication module 25 of this embodiment requires a predetermined memory chip on which its own telephone number information and the like are stored as well as a dedicated backup battery. To meet these requirements, on the sub control board 200, a memory chip 220 and a backup battery 230 are configured to be connected to the communication module 25 via the connector 202. The sub control board 200 operates with DC power supplied from the main control board 110, and supplies DC power to the communication module 25 via the connector 202 as stated above. An antenna connection terminal 25b of the communication module 25 is connected to an antenna connection terminal 191 attached on the housing 100.

The sub control board 300 is for connecting the main control board 110 to the communication module 20 of the CDMA standards. The sub control board 300 is provided with a connector 301 for connection to the main control board 110, a connector 302 for connection to a terminal 20a of the communication module 20 of the CDMA standards, and an interface circuit 310 for connecting the main control board 110 to the communication module 20. The interface circuit 310 performs change of the number of pins between the connector 302 and the connector 301, change of pin assignment, waveform shaping and so forth. The sub control board 300 operates with DC power supplied from the main control board 110, and also supplies DC power to the communication module 20 via the connector 302 as stated above. An antenna connection terminal 20b of the communication module 20 is connected to the antenna connection terminal 192 attached on the housing 100.

A terminal 26a of the communication module 26 of the PHS standards is connected to the connector 143 of the main control board 110. An antenna connection terminal 26b of the communication module 26 is connected to an antenna connection terminal 193 attached on the housing 100.

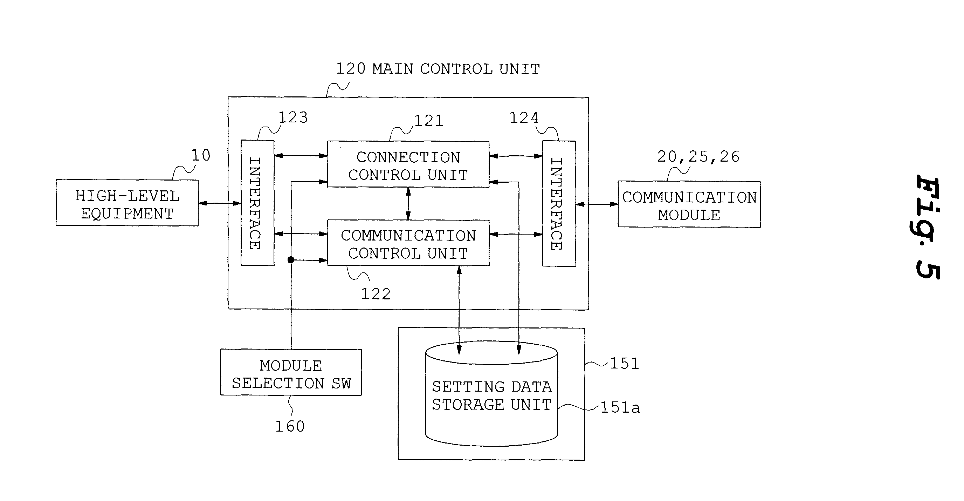

Next, the configuration and operation of the main control unit 120 will be described with reference to FIG. 5. FIG. 5 shows the functional block diagram of the main control unit 120. Only those configurative elements relevant to the essentials of the invention are stated here, with other elements omitted.

As shown in FIG. 5, the main control unit 120 is provided with a connection control unit 121 for performing connection control such as establishment of line connection, a communication control unit 122 for controlling data communication over a connection established by the connection control unit 121, an interface 123 for interfacing with the high-level equipment 10, and an interface 124 for interfacing with the communication modules 20, 25 and 26.

Processing performed by the connection control unit 121 and the communication control unit 122 is switched in accordance with which one of the communication modules 20, 25 and 26 is selected with the module selection switch 160. In this embodiment, the high-level equipment 10 is designed to be used with the communication modules 25 and 26 directly connected thereto. Accordingly, when either the communication module 25 or 26 is selected with the module selection switch 160, the connection control unit 121 and the communication control unit 122 get through data between the high-level equipment 10 and the communication module 25 or 26 without subjecting the data to special processing. On the other hand, when the communication module 20 is selected, the connection control unit 121 and the communication control unit 122 apply connection processing and/or tunneling processing to data between the high-level equipment 10 and the communication module 20 in accordance with predetermined rules. The data necessary for these manners of data processing are stored in a setting data storage unit 151a of the EPROM 151.

In case of communication using the radio packet communication network 40, the connection control unit 121 performs line connection control with AT commands and IP-layer connection control by LCP (Link Control Protocol) and IPCP. More specifically, the connection control unit 121 performs processing for LCP and IPCP with the high-level equipment 10, and processing for LCP, PAP, and IPCP with the radio packet communication network 40. This connection processing starts in response to receipt of a call initiation command from the high-level equipment 10 when the communication is started from the high-level equipment 10 side. Meanwhile, when communication is started from the LAN 50 side, the connection processing starts in response to receipt of a message (which will be described afterward) from the radio packet communication network 40. When communication is started from the LAN side, the connection control unit 121 also sends a message to the router 60 after the receipt of the message and the connection processing. This message is for notifying the router 60 of an IP address that has been dynamically assigned to the connection adapter 1.

In case of communication using the radio packet communication network 40, the communication control unit 122 forms a tunnel to the router 60 which is on the other side across the radio packet communication network 40 in data communication performed over a connection established by the connection control unit 121. More specifically, the communication control unit 122 encapsulates an IP packet received from the high-level equipment 10 and delivers it to the router 60, and also decapsulates an IP packet received from the router 60 and sends it to the high-level equipment 10. In the encapsulation, the communication control unit 122 encapsulates a telephone number predetermined for the communication module 20 together with the IP packet received from the high-level equipment 10. In the decapsulation, the communication control unit 122 also rewrites the destination IP address of the IP packet resulting from the decapsulation to a fixed IP address predetermined for the high-level equipment 10. As will be described below, the IP address of the high-level equipment 10 is an address obtained from IPCP processing with the high-level equipment 10.

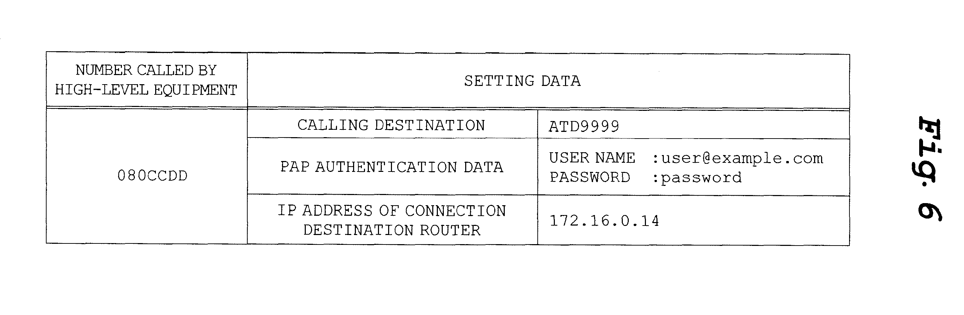

The data stored in the setting data storage unit 151a will be described with reference to FIG. 6. As shown in FIG. 6, the setting data storage unit 151a has stored therein setting data, corresponding to a telephone number to which the high-level equipment 10 initiated a call. Stored setting data include a call initiation command (including a telephone number) for connection to the radio packet communication network 40, authentication data that is necessary at the time of connection to the radio packet communication network 40, and the IP address of the router 60 which is the destination of connection.

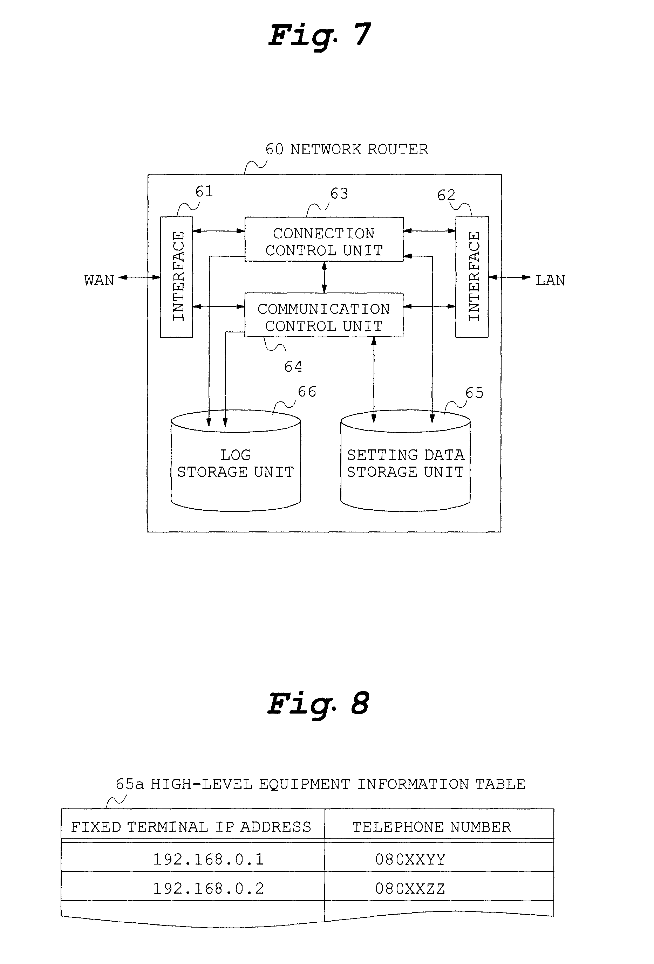

Next, the router 60 which is provided at the boundary between the radio packet communication network 40 and the in-house LAN 50 will be described with reference to FIG. 7. FIG. 7 shows the configuration of the router. As shown in FIG. 7, the router 60 is provided with a WAN-side interface 61, a LAN-side interface 62, a connection control unit 63 for performing connection control such as establishment of line connection, a communication control unit 64 for controlling data communication, a setting data storage unit 65 which has stored therein data necessary for the operations of the connection control unit 63 and the communication control unit 64, and a log storage unit 66 for storing history of operations of the connection control unit 63 and the communication control unit 64.

The setting data storage unit 65 has stored therein a high-level equipment information table 65a which lists sets of a fixed IP address (a fixed terminal IP address) allocated to the high-level equipment 10 and the telephone number of the communication module 20 connected to that high-level equipment 10, as shown in FIG. 8. The fixed terminal IP address is an address which is allocated to the high-level equipment 10 when it utilizes the network connection service which assigns fixed IP addresses described above with reference to FIG. 2.

The connection control unit 63 performs IP-layer connection control in cooperation with the messaging server 42. More specifically, upon receipt of a packet having the fixed terminal IP address of the high-level equipment 10 as its destination IP address from the LAN 50 side, the connection control unit 63 retrieves a telephone number corresponding to the fixed terminal IP address from the setting data storage unit 65. Then, the connection control unit 63 transmits a message to the retrieved telephone number using the messaging server 42. This causes the connection control unit 121 of the connection adapter 1 to start connection processing as stated above.

During communication using the radio packet communication network 40, the communication control unit 64 forms a tunnel to the connection adapter 1 which is on the other side across the radio packet communication network 40 over a connection established by the connection control unit 63. Specifically, the communication control unit 64 encapsulates an IP packet received from the LAN side and delivers it to the connection adapter 1, and also decapsulates an IP packet received from the connection adapter 1 and sends it to the LAN side.

In the encapsulation, the communication control unit 64 needs to set an IP address for the connection adapter 1 as the destination IP address of the encapsulated packet. When the communication is started from the LAN 50 side, this IP address is obtained from the message received from the connection adapter 1 as stated above. On the other hand, when the communication is started from the high-level equipment 10 side, this IP address is obtained from the source IP address of an IP packet received from the connection adapter 1.

In the decapsulation, the communication control unit 64 also takes out an IP packet and a telephone number through decapsulation. The communication control unit 64 retrieves a corresponding IP address from the high-level equipment information table 65a based on the telephone number, and rewrites the source IP address of the decapsulated IP packet to the retrieved IP address. Then, the communication control unit 64 delivers the IP packet to the LAN 50 side.

Next, the communication procedure in this system will be described with reference to drawings. Before describing the communication system of this embodiment, the communication procedure for a case where the network connection service presupposed by the high-level equipment 10 and the management computer 51 is used will be first described with reference to drawings. Since the high-level equipment 10 matches the communication module 25 of the PDC standards and the first radio packet communication network 45 as stated above, the connection adapter 1 applies no processing to data between the high-level equipment 10 and the communication module 25. The router 60 does not apply special processing either. Similar operations are performed also when the high-level equipment 10 is connected to the in-house LAN 50 using the communication module 26 and the radio packet communication network 46 of the PHS standards.

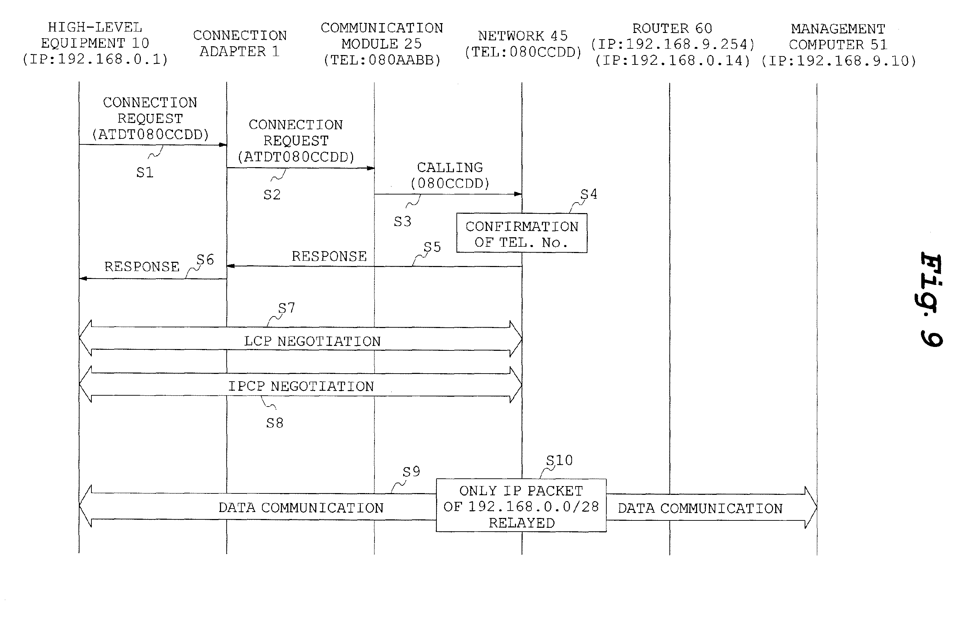

First, referring to the sequence chart of FIG. 9, a case where communication is started from the high-level equipment 10 to the management computer 51 will be described.

The description here presupposes the following matters. To the communication module 25, a telephone number "080AABB" is allocated by the carrier. An address group of 192.168.0.0/28 is distributed by the carrier, and an IP address of 192.168.0.1 is allocated to the high-level equipment 10 which is connected to the radio packet communication network 45 using the communication module 25. The IP address of the management computer 51, which is the destination of communication, is 192.168.9.10. The communication module 25 is connected to the relaying equipment for the radio packet communication network 45 by initiating a call with an "ATD" command to the telephone number "080CCDD".

As illustrated in FIG. 9, when the high-level equipment 10 initiates a call with an "ATD080CCDD" command to the connection adapter 1 (step S1), the connection control unit 121 of the connection adapter 1 transfers the command to the communication module 25 as it is (step S2). This call initiation may be triggered by the generation of an IP packet having a destination address of 192.168.9.10, for example. The AT command causes the communication module 25 to initiate a call to the relaying equipment in the radio packet communication network 45 (step S3). Hereupon, the relaying equipment checks the telephone number of the calling communication module 25, and rejects any connection from a terminal which is not a subscriber (step S4). Upon receiving a response "CONNECT" to the effect that connection has been completed at the line level via the communication module (step S5), the connection control unit 121 of the connection adapter 1 transfers the response to the high-level equipment 10 (step S6).

Next, the high-level equipment 10 starts processing to connect it to the in-house LAN 50 by PPP via the radio packet communication network 45. More specifically, the high-level equipment 10 establishes a connection at the IP level with the relaying equipment of the radio packet communication network 45 by LCP and IPCP (steps S7 and S8). Here, the connection control unit 121 of the connection adapter 1 passes packets pertaining to LCP and IPCP in both the directions. As the foregoing processing enables communication at the IP level between the high-level equipment 10 and the in-house LAN 50, data communication using higher protocols such as TCP/UDP is subsequently started (step S9). The relaying equipment of the radio packet communication network 45 relays only IP packets having a destination or source IP address included in 192.168.0.0/28 (step S10).

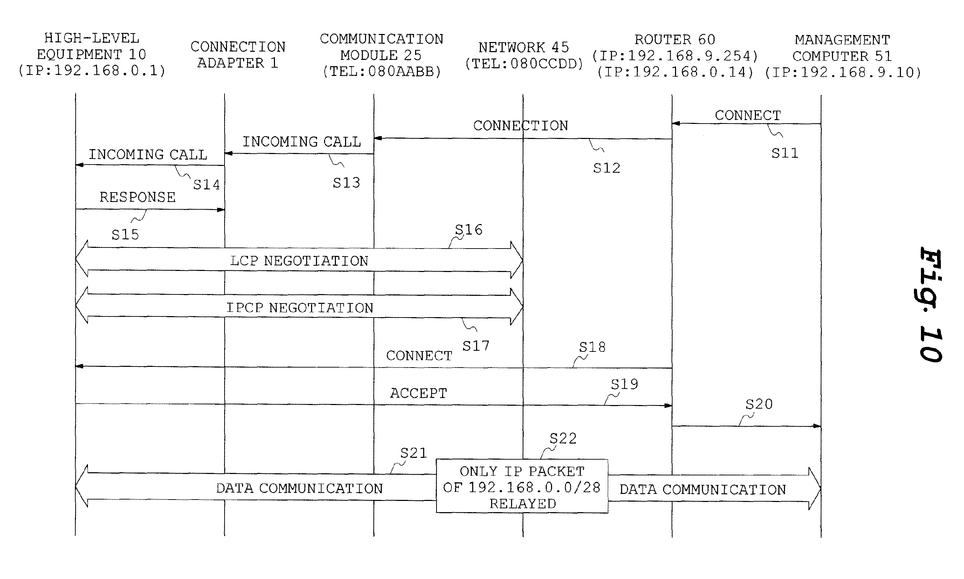

Next, a case where communication is started from the management computer 51 to the high-level equipment 10 will be described with reference to the sequence chart of FIG. 10.

When the management computer 51, in order to communicate with the high-level equipment 10 which is the communication destination, issues a connection request destined for the fixed IP address which was allocated to the high-level equipment 10 in advance (step S11), the router 60 delivers the packet to the radio packet communication network 40 according to usual routing rules. Then, the relaying equipment of the radio packet communication network 45 references the destination IP address of the packet and connects to the communication module 25 having a telephone number matching that IP address (step S12). The communication module 25 notifies the connection adapter 1 of the call arrival (step S13). The connection adapter 1 relays the notification of the call arrival to the high-level equipment 10 (step S14). Next, when the high-level equipment 10 gives a response to the notification of the call arrival (step S15), the connection adapter 1 starts processing of establishing connection with the relaying equipment by PPP. More specifically, the connection adapter 1 establishes a connection at the IP level with the relaying equipment of the radio packet communication network 45 by LCP and IPCP (steps S16 and S17). Here, the connection control unit 121 of the connection adapter 1 passes packets pertaining to LCP and IPCP in both the directions. As the foregoing processing enables IP-level communication between the high-level equipment 10 and the in-house LAN 50, data communication using higher protocols such as TCP/UDP can be subsequently performed between them. Thus, the router 60 relays the connection request received at step S11 to the high-level equipment 10 (step S18). Then, the router 60 relays a response from the high-level equipment 10 (step S19) to the management computer 51 (step S20). As the foregoing processing enables IP-level communication between the high-level equipment 10 and the in-house LAN 50, data communication using higher protocols such as TCP/UDP is subsequently started (step S21). The relaying equipment of the radio packet communication network 45 relays only IP packets having a destination or destination IP address included in 192.168.0.0/28 (step S22).

Next, with reference to drawings, description will be given of a case where the communication module 20 of the CDMA standards and the radio packet communication network 40 are used without remodeling or altering the high-level equipment 10 and/or the management computer 51 in any way.

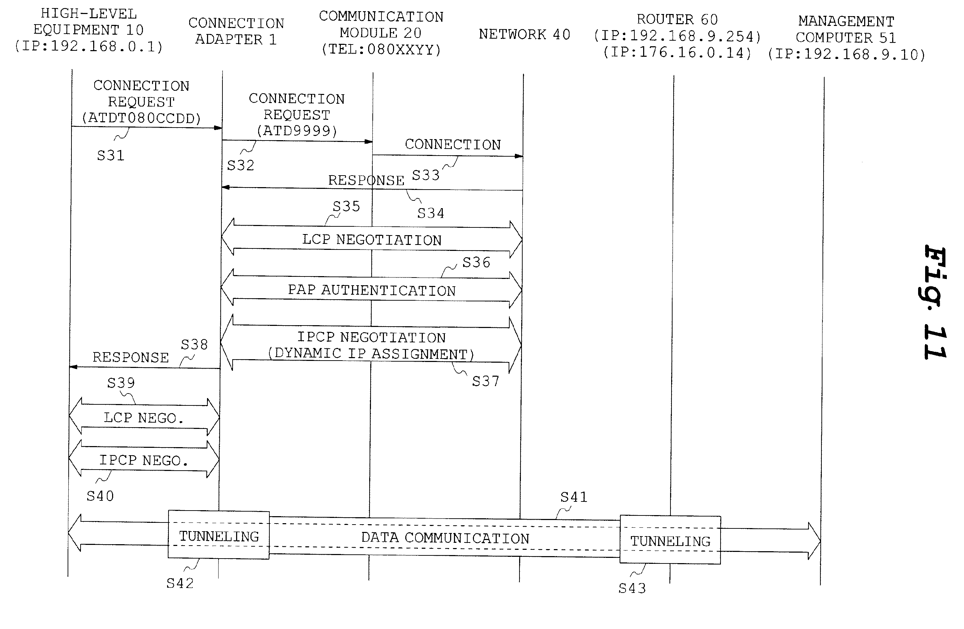

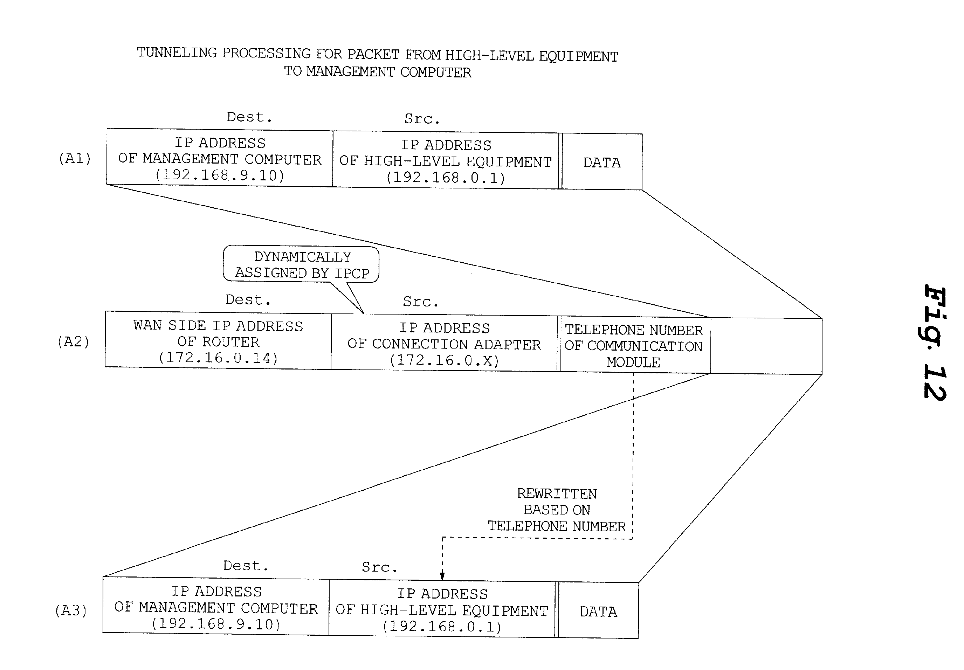

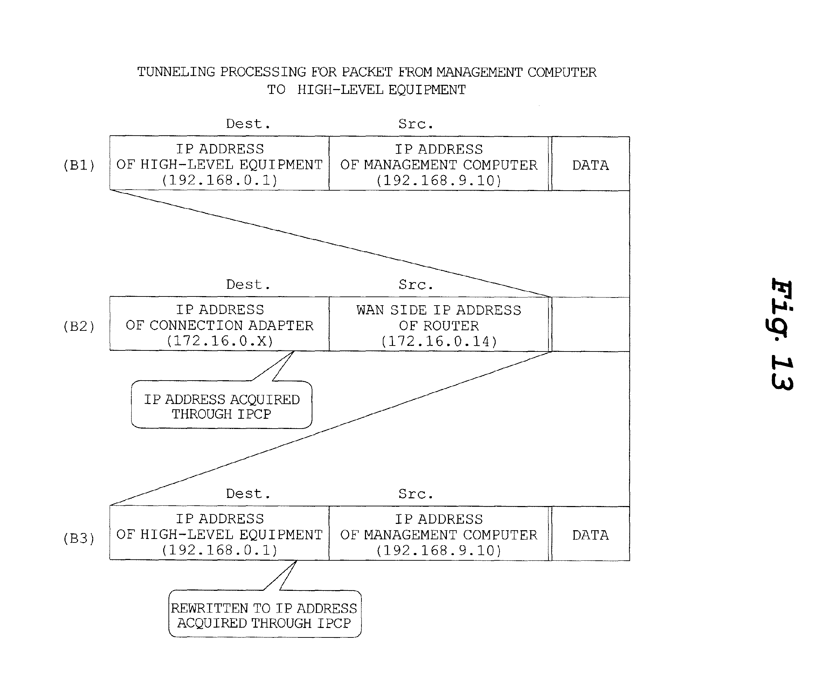

First, with reference to FIGS. 11 through 13, a case where communication is started from the high-level equipment 10 to the management computer 51 will be described. FIG. 11 is a sequence chart illustrating a case where communication is started from the high-level equipment 10 to the management computer 51, FIG. 12 illustrates tunneling processing for a packet from the high-level equipment 10 to the management computer 51, and FIG. 13 illustrates tunneling processing for a packet from the management computer 51 to the high-level equipment 10. In FIGS. 12 and 13, the separation between the header portion and the container portion of an IP packet is denoted by a double line.

The description here presupposes the following matters. To the communication module 20, a telephone number "080XXYY" is allocated by the carrier. An IP address group of 172.16.0.0/28 is distributed by the carrier, and an address included in the IP address group of 172.16.0.0/28 is dynamically allocated to the high-level equipment 10 which is connected to the radio packet communication network 40 using the communication module 20. To the router 60, an address of 172.26.0.14 is allocated. The IP address of the management computer 51 as the communication destination is 192.168.9.10. The communication module 20 is connected to the relaying equipment 41 of the radio packet communication network 40 by initiating a call with an "ATD9999" command. The relaying equipment 41 performs user authentication by PAP, and also identifies the destination of connection (the in-house LAN 50 in this example).

As shown in FIG. 11, when the high-level equipment 10 initiates a call with an "ATD080CCDD" command to the connection adapter 1 (step S31), the connection control unit 121 of the connection adapter 1 converts the command to "ATD9999", and transfers it to the communication module 20 (step S32). This call initiation can be triggered by the generation of an IP packet having a destination address of 192.168.9.10, such as the one shown in FIG. 12. The AT command causes the communication module 20 to initiate a call to the relaying equipment 41 in the radio packet communication network 40 (step S33). Upon receipt of a response "CONNECT" to the effect that connection has been completed at the line level via the communication module 20 (step S34), the connection control unit 121 of the connection adapter 1 starts processing to connect the connection adapter 1 to the in-house LAN 50 by PPP.

First, the connection control unit 121 of the connection adapter 1 starts an LCP negotiation with the relaying equipment 41 of the radio packet communication network 40 (step S35). The connection control unit 121 of the connection adapter 1 then performs PAP authentication with the relaying equipment 41 of the radio packet communication network 40 (step S36). This PAP authentication, though it is not supposed for the high-level equipment 10 which is designed for the radio packet communication network 45, is necessary when the radio packet communication network 40 is to be used. Therefore in this embodiment, the connection adapter 1 performs the authentication on behalf of the high-level equipment 10. Upon completion of this authentication processing, the connection control unit 121 of the connection adapter 1 starts an IPCP negotiation between the connection adapter 1 and the relaying equipment 41 of the radio packet communication network 40 (step S37). This results in completion of the IPCP negotiation, and a dynamic IP address of 172.16.0.X is assigned to the connection control unit 121 of the connection adapter 1 from the radio packet communication network 40. The assigned dynamic IP address is stored in storage means such as the EPROM 151.

Upon completion of the PPP negotiation, the connection control unit 121 of the connection adapter 1 transmits to the high-level equipment 10 a response "CONNECT" to the effect that connection has been completed at the line level (step S38). Having received the response, the high-level equipment 10 starts an LCP negotiation and an IPCP negotiation (steps S39 and S40). A point to be noted here is that the connection control unit 121 of the connection adapter 1 responds to the high-level equipment 10. Therefore, it seems to the high-level equipment 10 that processing of connection is performed with the packet communication network 45, which was described above with reference to FIG. 9. Also, as the connection control unit 121 of the connection adapter 1 obtains the IP address of the high-level equipment 10 through the IPCP processing, it stores the IP address in storage means such as the EPROM 151.

As the foregoing processing completes connection between the high-level equipment 10 and the in-house LAN 50, the high-level equipment 10 starts data communication to the management computer 51 (step S41). Hereupon, the communication control unit 122 of the connection adapter 1 and the communication control unit 64 of the router 60 perform tunneling processing so as to form a tunnel in the radio packet communication network 40 (steps S42 and S43).

More specifically, as illustrated in FIG. 12, for a packet transmitted from the high-level equipment 10 to the management computer 51, the communication control unit 122 of the connection adapter 1 encapsulates the IP packet received from the high-level equipment 10 and the telephone number of the communication module 20 and delivers the IP packet to the router 60 (see A1 and A2). Upon receiving the encapsulated IP packet, the communication control unit 64 of the router 60 first decapsulates the IP packet to take the IP packet and the telephone number. Then, the communication control unit 64 of the router 60 acquires an IP address matching the telephone number from the high-level equipment information table 65a. The communication control unit 64 then rewrites the source IP address of the IP packet resulting from the decapsulation to the IP address acquired on the basis of the telephone number, and delivers the packet to the LAN 50 side (see A2 and A3).

On the other hand, as shown in FIG. 13, for a packet transmitted from the management computer 51 to the high-level equipment 10, the communication control unit 64 of the router 60 encapsulates the IP packet received from the LAN 50 side, and delivers it to the connection adapter 1 (see B1 and B2). Since an IP packet has been already received from the connection adapter 1, the destination IP address of the encapsulated IP packet can be obtained by referencing the source IP address of that IP packet. Upon receiving the encapsulated IP packet, the communication control unit 122 of the connection adapter 1 first decapsulates the IP packet to take out the IP packet. Then, the communication control unit 122 rewrites the destination address of the IP packet resulting from the decapsulation to the IP address of the high-level equipment 10 that was obtained at step S40. Then, the communication control unit 122 delivers the IP packet to the high-level equipment 10 (see B2 and B3).

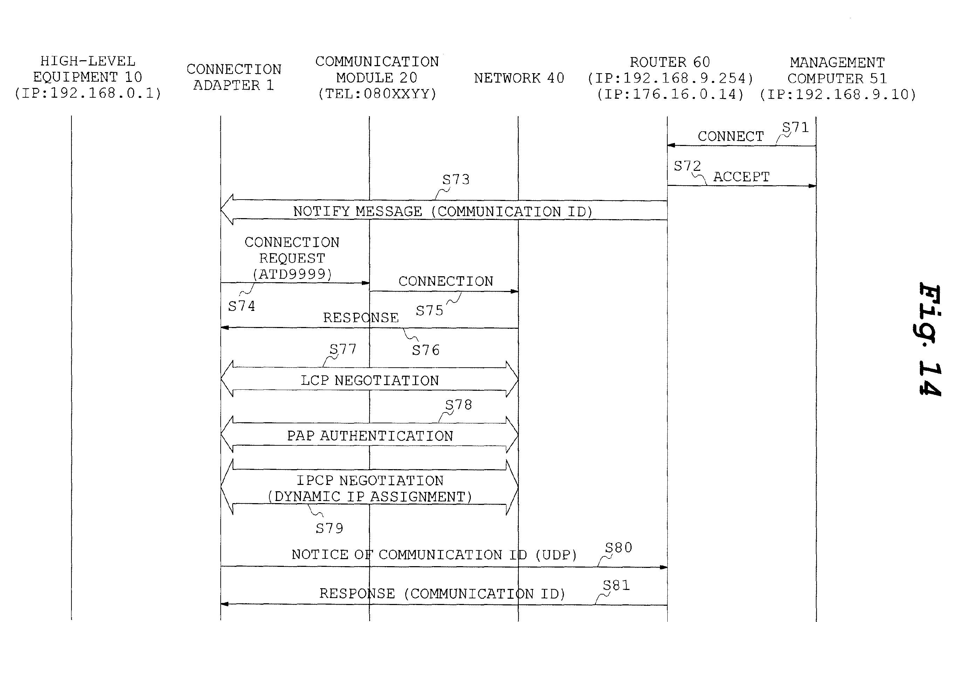

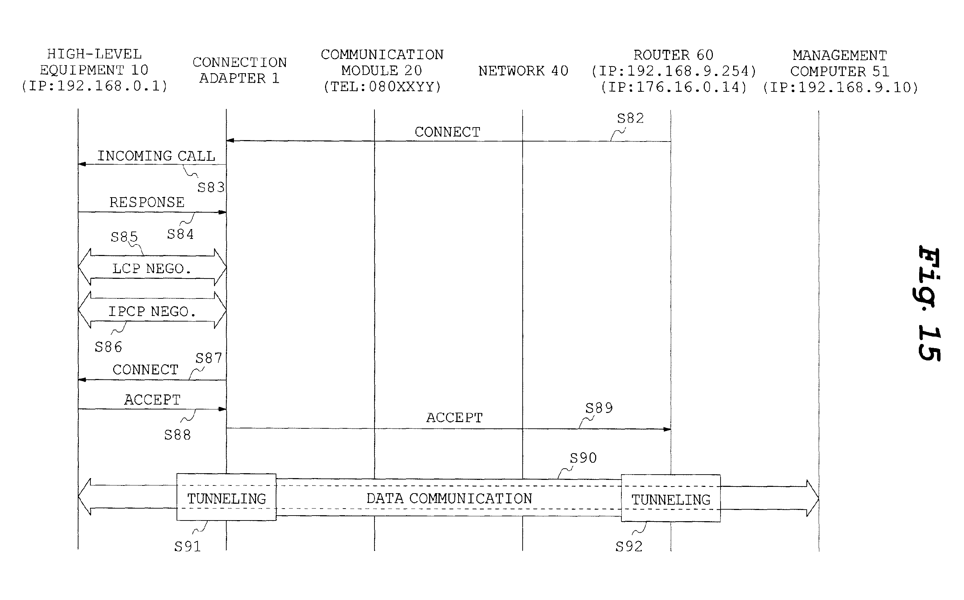

Next, a case where communication is started from the management computer 51 in the in-house LAN 50 to the high-level equipment 10 will be described with reference to FIGS. 14 and 15. FIGS. 14 and 15 are sequence diagrams illustrating communication started from the management computer.

The management computer 51, in order to communicate with the high-level equipment 10 as the communication destination, issues a packet for a connection request "CONNECT" destined for the fixed terminal IP address which is allocated in advance to the high-level equipment 10 (step S71). In response to the connection request, the connection control unit 63 of the router 60 returns a response to the management computer 51 in place of the high-level equipment 10 (step S72).

Next, the connection control unit 63 of the router 60 acquires a telephone number matching the destination IP address of the connection requesting packet from the high-level equipment information table 65a. Then, the connection control unit 63 generates and stores a communication ID for uniquely identifying the current communication. Then, the connection control unit 63 delivers a message to the obtained telephone number, namely to the connection adapter 1 connected to the high-level equipment 10, by utilizing a messaging service (step S73). The message is transmitted by requesting by HTTP the messaging server 42 to send a message. The transmitted message contains the communication ID.

Having received the message, the connection control unit 121 of the connection adapter 1 starts processing of connection to the first in-house LAN 50 on the basis of setting data stored in the setting data storage unit 151a. More specifically, the connection control unit 121 delivers an "ATD9999" command to the communication module 20 (step S74). In response to the AT command, the communication module 20 initiates a call to the relaying equipment 41 in the radio packet communication network 40 (step S75). Upon receipt of a response "CONNECT" to the effect that connection is completed at the line level via the communication module 20 (step S76), the connection control unit 121 of the connection adapter 1 starts processing to connect the connection adapter 1 to the in-house LAN 50 by PPP.

First, the connection control unit 121 of the connection adapter 1 starts an LCP negotiation with the relaying equipment 41 of the radio packet communication network 40 (step S77). The connection control unit 121 of the connection adapter 1 then performs PAP authentication with the relaying equipment 41 of the radio packet communication network 40 (step S78). Then, the connection control unit 121 of the connection adapter 1 starts an IPCP negotiation between the connection adapter 1 and the relaying equipment 41 of the radio packet communication network 40 (step S79) . This results in completion of the IPCP negotiation, and a dynamic IP address of 172.16.0.X is assigned to the connection control unit 121 of the connection adapter 1 from the radio packet communication network 40. The assigned dynamic IP address is stored in storage means such as the EPROM 151.

Upon completion of the PPP negotiation, the connection control unit 121 of the connection adapter 1 transmits to the router 60 the communication ID received from the router 60 in a UDP packet (step S80). Consequently, the connection control unit 63 of the router 60 can recognize the IP address which was dynamically assigned to the connection adapter 1 by referencing the source IP address of the UDP packet. Next, upon receiving the UDP packet, the connection control unit 63 of the router 60 transmits a response containing the communication ID to the connection adapter 1 (step S81).

Next, the connection control unit 68 of the router 60 relays the connection requesting packet received at step S71 to the connection adapter 1 (step S82). Hereupon, the destination IP address of the connection requesting packet is converted to the dynamic terminal IP address of the connection adapter 1, and the source IP address thereof is converted to the WAN-side IP address of the router 60. Upon receipt of the connection request, the connection control unit 121 of the connection adapter 1 notifies the high-level equipment 10 of the call arrival (step S83). Upon receiving the notification of the call arrival, the high-level equipment 10 notifies the connection adapter 1 of the response to that notification of the call arrival (step S84), and also starts an LCP negotiation and an IPCP negotiation (steps S85 and S86). A point to be noted here is that the connection control unit 121 of the connection adapter 1 responds to the high-level equipment 10. Therefore, it seems to the high-level equipment 10 that processing of connection is performed with the packet communication network 45, which was described above with reference to FIG. 11. Also, as the connection control unit 121 of the connection adapter 1 obtains the IP address of the high-level equipment 10 through the IPCP processing, it stores the IP address in storage means such as the EPROM 151.

Upon completion of the PPP negotiation, the connection control unit 121 of the connection adapter 1 transfers the connection requesting packet received from the router 60 at step S82 to the high-level equipment 10 (step S87). Hereupon, the destination IP address of the connection requesting packet is converted to the fixed terminal IP address of the high-level equipment 10. Upon receiving the connection requesting packet, the high-level equipment 10 notifies the connection adapter 1 of the response to the requesting packet (step S88). The destination and source IP addresses of this response packet are interchanged values of the destination IP address and the source IP address of the connection requesting packet. The connection adapter 1 converts the source IP address to the dynamic terminal IP address of the connection adapter 1, and transmits the packet to the router 60 (step S89).

The foregoing processing causes the high-level equipment 10 to determine that connection to the management computer 51 has been completed, and starts data communication to the management computer 51 (step S90). Hereupon, the communication control unit 122 of the connection adapter 1 and the communication control unit 64 of the router 60 perform tunneling processing to form a tunnel in the radio packet communication network 40 (steps S91 and S92). The transition of an IP address through this tunneling processing is similar to that described above with reference to FIGS. 12 and 13.

As has been thus far described in detail, the system of this embodiment can utilize a network connection service that assigns dynamic IP addresses without requiring any altering or remodeling of the high-level equipment 10 and the management computer 51 that have utilized a network connection service that assigns fixed IP addresses. More specifically, communication can be started from the management computer 51 to the high-level equipment 10 even when a network connection service that assigns dynamic IP addresses is utilized. Also, since the source IP address of a packet received by the management computer 51 is a fixed IP address allocated in advance to the high-level equipment 10, the management computer 51 can identify the destination of communication even when the communication has been started from the high-level equipment 10 to the management computer 51.

Furthermore, in the system of this embodiment, on the LAN 50 side, the high-level equipment 10 is identified by not an IP address actually set for the high-level equipment 10 but by an IP address collectively managed in the router 60. The IP address managed by the router 60 is linked to a telephone number. Accordingly, the IP address set for the high-level equipment 10 needs not necessarily correspond with the IP address managed in the router 60. In other words, it suffices to set an arbitrary value for the high-level equipment 10 as its own IP address and appropriately manage a correspondence table showing correspondence between the telephone number and the IP address of the communication module 20 in the router 60. This greatly facilitates network management.

That is, conventional techniques require a very burdensome task of setting an appropriate IP address for each high-level equipment 10. This system eliminates the necessity for this task. Instead, all that has to be done is to set a correspondence table between the telephone number of the communication module 20 connected to each high-level equipment 10 and an IP address which should be allocated to that high-level equipment 10 in the router 60, which can improve efficiency of management and reduce setting errors.

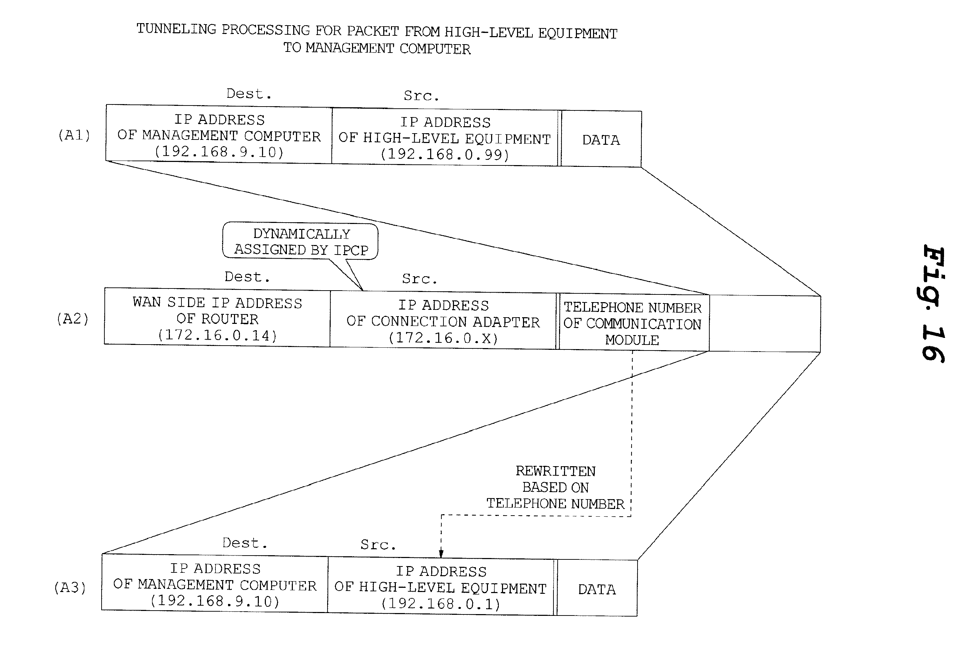

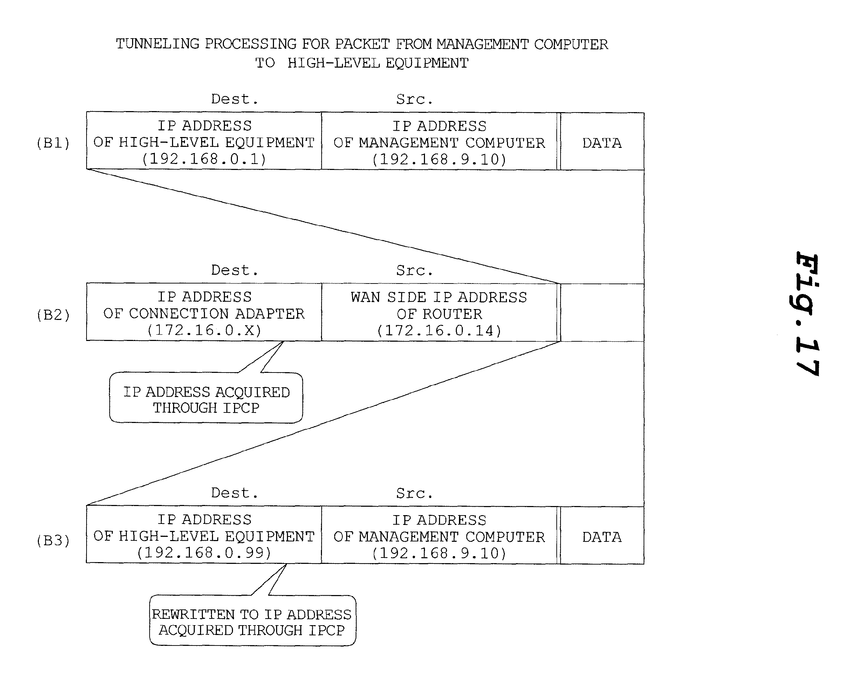

Such a form of operation will be described with reference to FIGS. 16 and 17. FIGS. 16 and 17 illustrate tunneling processing. In this operation form, it is supposed that an IP address of 192.168.0.99 is set for the high-level equipment 10. It is also supposed that a telephone number of 080XXYY is allocated to the communication module 20 connected to the high-level equipment 10. In this situation, in the high-level equipment information table 65a, an IP address of 192.168.0.1 which is recognized by the management computer 51, not the actual IP address of the high-level equipment 10, is allocated as an IP address matching the telephone number. When such a setting is made, the source address of an IP packet delivered from the high-level equipment 10 is rewritten at the router 60 on the basis of the high-level equipment information table 65a as illustrated in FIG. 16. On the other hand, the destination address of an IP packet delivered from the management computer 51 is rewritten at the connection adapter 1 to the actual IP address of the high-level equipment 10 which was obtained in processing of connection with the connection adapter 1 (step S40 of FIG. 11 and step S86 of FIG. 15). With this tunneling processing, it seems to the management computer 51 as if it is communicating with a terminal that has an IP address of 192.168.0.1. Therefore, even when a large quantity of high-level equipment 10 is managed, only the same IP address has to be set for all the high-level equipment 10 without having to set an IP address for each high-level equipment 10 separately if the high-level equipment information table 65a is appropriately set. To put it another way, an IP address set for each high-level equipment 10 is a dummy address. This significantly facilitates network management.

Although the present invention has been so far described in detail with respect to the embodiment thereof, the invention is not limited the embodiment. For instance, while the embodiment above concerned a telemetering system for managing vending machines, the present invention is applicable to other telemetering and telematics systems as well.

Also, while the above-described embodiment illustrated communication modules of the PDC, CDMA, and PHS standards, the present invention can also be practiced with communication modules of other standards. Similarly, other interface standards than those cited above can also be applied at the high-level equipment side.

In addition, the embodiment above illustrated authentication method, addressing system, and address assignment method (whether a fixed or dynamic IP address is assigned) as differences between the network connection service provided in the radio packet communication network 45 or 46 and that in the radio packet communication network 40. However, the present invention is still applicable when the difference between them is any one or some combination of them. Furthermore, other differences may be absorbed by the connection adapter as necessary. For example, although in the above-described embodiment PAP authentication is performed in the radio packet communication network 40, in a case connection is made to a communication network which performs CHAP (Challenge Handshake Authentication Protocol) authentication, for instance, CHAP may be implemented in the connection adapter.

Also, although the embodiment above showed that the three communication modules 20, 25 and 26 are contained in the connection adapter 1 to enable utilization of any one of the radio packet communication networks 40, 45 and 46, only one of the communication modules 20, 25 and 26 may be contained and connected.

## Claims

1. A communication system that utilizes a network connection service which connects a LAN (50) and a radio communication terminal via a radio packet communication network (40) and which dynamically assigns an IP address to the radio communication terminal, wherein:
a network router (60) is disposed at the boundary between the radio packet communication network (40) and the LAN (50);
the radio communication terminal comprises a communication device (20) for connection to the radio packet communication network (40), high-level equipment (10) for performing communication using the communication device (20), and a connection adapter (1) for intervening between the communication device (20) and the high-level equipment (10) to relay communication; and
a tunnel is formed in the radio packet communication network (40) between the connection adapter (1) and the network router (60) so that IP packets pertaining to communication between the high-level equipment (10) and the LAN (50) are passed through said tunnel.

2. The communication system according to claim 1, wherein:
the connection adapter (1) comprises a communication controller (122) for delivering to the network router (60) an IP packet which encapsulates an IP packet received from the high-level equipment (10) and a telephone number allocated in advance to the communication device (20) in a container; and
the network router (60) comprises a storage (65) which has stored therein a correspondence table (65a) showing correspondence between the telephone number allocated in advance to the communication device (20) and an IP address, and a communication controller (64) for decapsulating an IP packet received from the connection adapter (1), acquiring from said storage (65) an IP address matching the telephone number that results from the decapsulation, and rewriting the source address of an IP packet resulting from the decapsulation to said IP address.

3. The communication system according to claim 2, wherein:
the network router (60) comprises a connection controller (63) for, upon detection of an IP packet pertaining to start of communication from the LAN (50) side to the high-level equipment (10), acquiring a telephone number matching the destination IP address of the IP packet from said storage (65), and sending a message to said telephone number by using a messaging service provided by the radio packet communication network (40);
the connection adapter (1) comprises a connection controller (121) for connecting to the radio packet communication network (40) upon receipt of said message from the network router (60), and notifying the network router (60) of a dynamic IP address assigned by the radio packet communication network (40); and
the communication controller (64) of said network router (60) sets the dynamic IP address received from the connection adapter (1) as the destination IP address of an encapsulated IP packet.

4. The communication system according to claim 3, wherein:
the connection controller (121) of the connection adapter (1) performs processing of connection to the radio packet communication network (40) as well as processing of connection with the high-level equipment (10), and acquires the IP address of the high-level equipment (10); and
the communication controller (122) of the connection adapter (1) rewrites the destination address of an IP packet resulting from decapsulation to the IP address of the high-level equipment (10) acquired by said connection controller (121).

5. A connection adapter for communication devices, comprising
a first interface (124, 210, 310) for connection to a communication device (20) for use in a radio packet communication network (40);
a second interface (123, 131, 132, 133) for connection to high-level equipment (10) which performs communication with a LAN (50) via the radio packet communication network (40);
a connection controller (121) for controlling connection between said high-level equipment (10) and said radio packet communication network (40); and
a communication controller (122) for relaying communication between said high-level equipment (10) and the LAN (50), wherein:
said communication controller (122) forms a tunnel to a network router (60) which is disposed at the boundary between the radio packet communication network (40) and the LAN (50) in the radio packet communication network (40), and performs tunnel communication to pass IP packets pertaining to communication between the high-level equipment (10) and the LAN (50) through said tunnel.

6. The connection adapter for communication devices according to claim 5, wherein:
said communication controller (122) delivers to the network router (60) an IP packet which encapsulates an IP packet received from the high-level equipment (10) and a telephone number allocated in advance to the communication device (20) in a container.

7. The connection adapter for communication devices according to claim 6, wherein:
said connection controller (121) connects to the radio packet communication network (40) upon receipt of a message which is sent from the network router (60) using a messaging service provided by the radio packet communication network (40), and notifies the network router (60) of a dynamic IP address assigned by the radio packet communication network (40).

8. The connection adapter for communication devices according to claim 7, wherein:
said connection controller (121) performs processing of connection to the radio packet communication network (40) as well as processing of connection with the high-level equipment (10), and acquires the IP address of the high-level equipment (10) through the connection processing; and
said communication controller (122) rewrites the destination address of an IP packet resulting from decapsulation to the IP address of the high-level equipment (10) acquired by said connection controller (121).

9. A network router disposed at the boundary between a LAN (50) and a radio packet communication network (40) in an environment of a network connection service that connects said LAN (50) and a radio communication terminal via the radio packet communication network (40) and that dynamically assigns an IP address to the radio communication terminal, the network router (60) comprising:
a communication controller (64) for forming a tunnel to the radio communication terminal within the radio packet communication network (40).

10. The network router according to claim 9, comprising:
a storage (65) which has stored therein a correspondence table (65a) showing correspondence between a telephone number allocated in advance to the radio communication terminal and an IP address, wherein:
said communication controller (64) decapsulates an IP packet received from the radio communication terminal to acquire a telephone number and an IP packet, acquires from said storage (65) an IP address matching the telephone number resulting from the decapsulation, and rewrites the source address of the IP packet resulting from the decapsulation to said IP address.

11. The network router according to claim 10, comprising:
a connection controller (63) for, upon detection of an IP packet pertaining to start of communication from the LAN (50) side to the radio communication terminal, acquiring a telephone number matching the destination IP address of the IP packet from said storage (65), and sending a message to said telephone number by using a messaging service provided by the radio packet communication network (40), wherein:
said communication controller (64) acquires from the radio communication terminal a dynamic IP address dynamically assigned to that radio communication terminal, and sets the dynamic IP address as the destination IP address of an encapsulated IP packet.
